# EUROPEAN PATENT SPECIFICATION

(11) **EP 0 894 701 B1**
(45) Date of publication and mention of the grant of the patent: **10.09.2003**
(21) Application number: 98113947.0
(22) Date of filing: 24.07.1998
(51) Int. Cl.: B62K 19/32

(54) **Conical shaped locking device for a bearing holder part of a motor vehicle steering unit**
Konisch geformte Verriegelungseinrichtung für Lagerhalterung einer Motorfahrzeug- Lenkeinrichtung
Dispositif de verrouillage de forme conique pour support de palier de direction de véhicule à moteur

(30) Priority: 29.07.1997 IT MI971815 U
(43) Date of publication of application: 03.02.1999
(73) Proprietor: M.V. AGUSTA S.p.A, 21100 Varese (IT)
(72) Inventor: Tamburini, Massimo, Domagnano 47895,Repubblica di San Marino (IT)
(74) Representative: Giambrocono, Alfonso, Dr. Ing.

(56) References cited:
- DE-U- 9 316 432
- JP-A- 55 091 476

## Description

It is the object of this invention a steering unit comprising a locking device for a bearing holder part of the steering unit in a motorcycle or similar according to preamble of main claim. Such a steering unit is known for instance from DE-U-9 316 432.

As it is well known, a motorcycle (or a similar vehicle with two or three wheels) includes handlebars connected to a steering axis located within a sleeve held in front by vehicle chassis, such handlebars, and steering axis being parts of a steering unit to which usual suspensions are joined which cooperate with front wheel of motorcycle. Steering hub can be located within a hollow cylindrical body in its turn inserted (in an either coaxial or eccentric way) either within the sleeve or associated with flanged parts located at opposite end parts of steering axis defined by this hub associated directly to sleeve.

With a particular, but not restrictive reference to the case in which this hub is located within cylindrical body, this last one operates as a bearing holder part capable to disconnect mechanically hub from same body located between hub and sleeve and forming one piece only with this last one; this in order to allow hub rotation within above mentioned body and therefore steering of front wheel of vehicle. In order to hold these bearings, cylindrical body is provided with, in relation to opposite end parts, housings for these bearings, these last ones being placed between this body and steering hub.

In a motorcycle in which steering hub is placed in cylindrical body above mentioned, there can be necessity (particularly for competition motorcycles) to change relative position between steering axis (coincident with that of hub) and axis of sleeve in order to modify (to advance or to draw back) vehicle pitch (or distance between its front and back wheels) or wheel base. For this purpose, it is essential to be in a position to separate cylindrical body of sleeve in order to have it turning within this last one in order to obtain the change above mentioned in the desired way. In order to obtain this, it is known to provide in sleeve of chassis a longitudinal slit (at least in correspondence with one of its higher or lower parts), in proximity of which, on opposite sides of it, two small wings are provided which jut out of the same sleeve and capable of being locked together by a screw (or any similar locking part manually operated by means of a suitable tool) introduced in provided locations in above said small wings of which at least one must be threaded. By means of the removal of these wings, possibility is obtained to rotate steering hub within its sleeve in order to get above mentioned modification. Once this is carried out, small wings are again taken one near to the other and thus cylindrical body or bearing holder part is again locked in sleeve.

This well known solution has various problems. In first place, use of this solution causes a locking pressure which is not uniform on bearing holder part which causes among other problems an out-of-roundness and therefore a malfunctioning of bearings here located, with subsequent repercussions on vehicle drivability and related dangerousness.

A further effect, also if a secondary one, but not of neglectable importance is that this locking system may originate, is that of causing a loss in cylindricality of sleeve of chassis because during locking the portion of this sleeve which is nearer to the points of attachment with same chassis remains about fixed and not changed while remaining part is deformed under effect of locking with a consequent out-of-roundness of sleeve. This last one, when more than one change is made of the position of the steering axis, causes an increasing difficulty of closing wings and also of insertion of steering hub in sleeve, and it can also lead to possibility of not being in a position to carry out this locking with consequent rejection of whole chassis (or necessity to replace sleeve).

Besides because surfaces to be blocked are cylindrical, a mistake made in complying with work tollerances in sleeve (which is always possible because to keep them exactly is very hard for usual production methods of this part of a motorcycle) can cause a steering axis and steering angles not exactly as desired and as a result these parts become useless.

Mistakes in cylindricality may be also due to welding of sleeve to chassis which causes in its neighborhoods a hardening of material with which sleeve is made, with subsequent possibility of different behaviour of tool used in its working.

To this it must be added that solution well known above mentioned does not allow an easy insertion of steering hub and of related bearing holder part because it is carried out by means of forcing this unit into this last one (obtained by striking the hub with a suitable tool). This forcing can damage bearing holders locations with obvious consequences. This insertion is also made difficult by presence of other parts (brakes, fork) connected with sleeve.

Purpose of this discovery is that of providing a steering unit and a locking device of bearing holder part or cylindrical body within the sleeve of a motorcycle that allows a simple, safe, and reliable and repeated change of steering axis without that this implies arising of problems connected to deformation of sleeve, of steering hub or of body with which it cooperates.

In particular, purpose is that of offering a locking devise of mentioned type that allows to distribute uniformly locking stresses of bearing holder part in sleeve, thus to prevent out-of-roundness or in any case permanent plastic deformations of this last one.

An other purpose is to offer a locking device of above mentioned type that allows use of materials of different mechanical characteristics, particularly of a high lightness, to manufacture either cylindrical body or bearing holder part and steering hub thus allowing manufacture of vehicles having a steering unit of high lightness.

A further purpose is to offer a device of mentioned type that is capable to autocenter bearing holder part within sleeve without that this requires special operations on this last one and on hub.

An other purpose is that to offer a device of mentioned type that allows to manufacture a sleeve of a practically cylindrical shape and however to allow a simple introduction into it of bearing holder part,without that this operation requires to force this part in sleeve by means of a tool.

These and other purposes that will become apparent to those skilled in the art are reached by a steering unit and a locking device according to enclosed claims.

For a better understanding of this discovery we enclose simply as an example, but not in a restrictive way, following drawing, in which:
figure 1 shows a side view of a front part of a motorcycle, partially cross section and with a few parts left out for a better clearness, showing device according to invention;

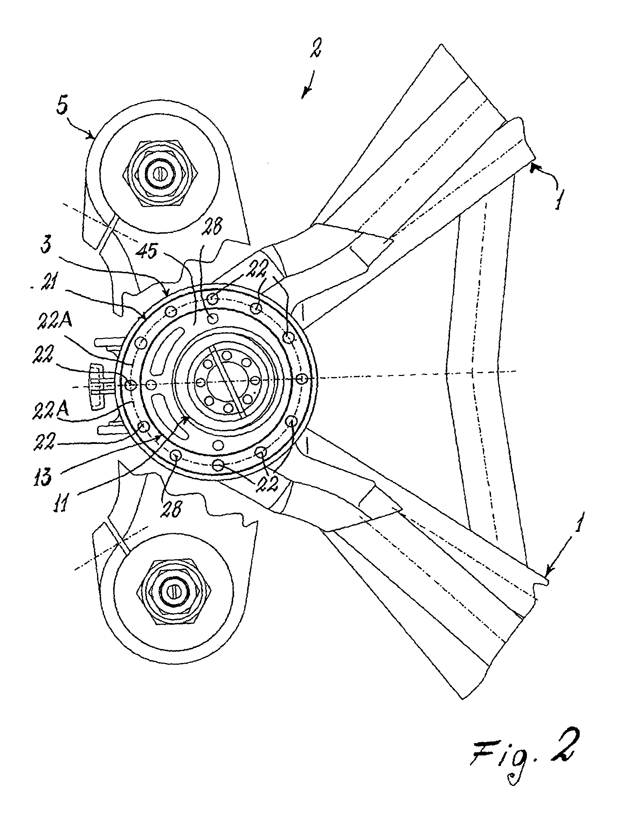

figure 2 shows a top view of front part of motorcycle, with device according to invention.

With reference to mentioned figures, a motorcycle includes chassis 1 holding at one front end 2 a sleeve 3 in which a steering axis or a steering hub 4 is placed connected to usual handlebars not shown. Steering axis or hub 4 is solidly connected to a steering head 5 and to a steering base 6; to these last ones a front suspension unit (7) of a motorcycle is associated in a well known way. These steering head and base, as well as axis 4 and parts to it connected make up a steering unit of front wheel of vehicle. Steering base 6 is provided with a housing 8 in which an end part 9 is inserted in connection with steering hub 4. Opposite end part 10 of this axis or hub 4 is inserted in a body or lockring 11 cooperating by means of an end flange part 12 with steering head 5. End parts 9 and 10 of steering axis 4 and also lockring 11 and housing 8 of steering base 6 are threaded so that desired coupling is provided with this axis. As an alternative, axis 4 can be inserted by pressure, with an interference, in housing 8.

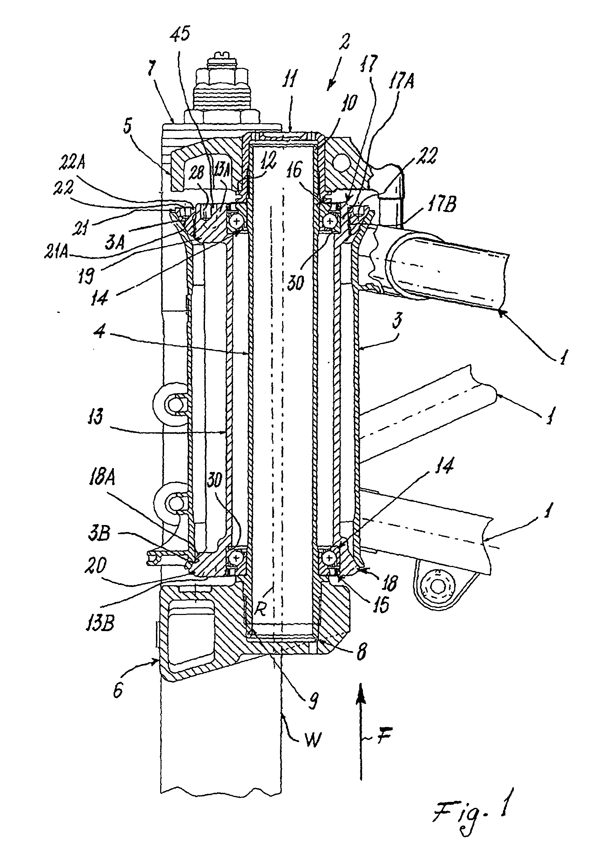

Hub or steering axis 4 is inserted into a cylindrical hollow body 13 or bearing holder part of steering unit. This last one is located with its own axis W eccentrically within its sleeve 3 (axis of which is indicated with R in figure 1). This axis coincides with that of steering hub 4.

In connection with opposite end parts 13A 13B of body 13 housings 30 are provided in which mechanical decoupling parts are inserted or in other words bearings 14 (or similar parts) that decouple axis or hub 4 from said body 13 in order to allow hub rotation in the last one at time of steering of front wheel of vehicle (not shown). Seal rings (or similar parts) 15 and 16 are located in relation with bearings 14 and are placed over them. Ring 16 is placed between flange 12 of lockring 11 and bearing 14 adjacent to it, this lockring compensates plays that are present between bearing and its housing 30 by means of action exerted by flange 12 on said bearing. This action can be changed by means of a different locking force of lockring on hub or axis 4.

Body 13 shows, at opposite end parts, flanges 17 and 18 (located near, respectively, to head 5 and to base 6 of steering unit) including portions 19 and 20 eccentrically jutting out of body 13 with reference to axis W previously mentioned. Flange 18, located in bottom, shows an outside surface 18A with a conical shape that cooperates with a first end part (with reference to figure 1) 3B of sleeve 3 also with a conical shape but with a different inclination. Flange 17 located in the upper part shows a cylindrical centering part 17A and a threaded part 17B on which a lockring 21 is screwed, with an inside thread and with a conical shape outside 21A made with metallic material, plastic material or any other material. This lockring is provided with blind holes 22 in free top surface 22A (with reference to figures) on which it is possible to operate by means of a special tool (but a known one) to carry out locking or alignment of this lockring or slackening of this lockring on bearing holder part 3. This lockring besides cooperates with its conical surface 21A, with a second end part 3A of sleeve 3 which is also with a conical shape.

Let us suppose now to require a change in position of steering axis W respective to that of sleeve 3. In order to accomplish this, after having separated lockring 11 from hub 4, we act on holes 22 of lockring 21 so that it is unscrewed from hollow body or bearing holder part 13. When lockring is separated from this last one, we act by means of a suitable and well known tool in notches 28 provided in a top surface 45 (with reference to figure 1) of portion 19 of body 13 in such a way to rotate it within sleeve 3 and to change spatial location of axis W with reference to axis R (this axis W is represented incident to axis R but it can also be parallel to it). Lockring 21 is afterwards reassembled and it is locked on body 13. When lockring 21 is screwed axial locking stress is transformed, owing to conical shaped surfaces 21A and 3A which come into contact, in a radial stress which makes possible the blocking of eccentric body 13 in reference to sleeve 3 solidly connected to the chassis.

In a first assembly of steering hub 4 and of bearing holder body or part 13 within sleeve 3, insertion of these parts in this last one is carried out in a simple way and without any special forcing action. Insertion is carried out from bottom according to arrow F in figure 1 until conical shaped surfaces 13B and 3B come into contact. At this time, flange 17 of body 13 is located in connection with upper part (countersunk) of sleeve. Lockring 21 is afterwards inserted in this portion and it is locked on it; by this operation , as already mentioned , a traction is obtained in the direction of arrow F of body 13 within sleeve and final coupling of surfaces 13B and 3B, 21A and 3A respectively. Contact pressure between above mentioned parts (that is lockring 21 - sleeve 3 and flange 18 - sleeve 3) is uniformly distributed on all their surfaces thus out-of-roundness of bearings 14 is avoided. Use of lockring avoids also inconvience of out-of-roundness of sleeve 3 of chassis and contact surfaces, now with a conical shape, and inconvenience of a dimensional mistake with subsequent rejects, because possible mistakes in mechanical workings, will only cause a vertical translation of inside parts in sleeve of chassis but steering angle is guaranteed to be well kept.

A preferred embodiment has been described of this discovery. In a possible other embodiment, lockring 21 shows its outside surface threaded and straight capable to cooperate with sleeve 3 also straight and inside threaded, while contact surface with flange 19 is conical shaped (and capable to cooperate with a related conical shaped part of this flange). Also in this case same results are obtained of construction embodiment described in figures.

According to an other embodiment, body 13 is designed with more parts which cooperate together and with lockring 21, this last one in the insertion between this body and sleeve by exerting a traction action on said body towards steering head so that a stable coupling is obtained between bearing holder part and sleeve.

According to an other embodiment lockring 21 is in the direction of the steering base and it operates from bottom (with reference to drawings) on body 13.

According to again an other embodiment, lockring includes more descreet portions capable to cooperate with different surface portions of body 13 and of sleeve 3.

Finally, according again to an other embodiment, wedgeshaped lockrings are provided at both end parts of body 13 and cooperate in a movable way with it thus to force it to stay within sleeve 3.

Also these other embodiments as those related ones in which cylindrical body 13 is replaced by flanged parts located at opposite end parts of steering hub 4, in any case still included in the term "bearing holder part" of claims, are thought to be included in the scope of this invention as defined by the claims.

## Claims

1. Steering unit comprising a locking device for a bearing holder part (13) of the steering unit of a motorcycle or similar of the type including a steering axis (4) placed within the bearing holder part, which is inserted at least partially in a sleeve (3) of chassis (1) of vehicle, the steering axis (4) being part of an assembly unit of steering, with handlebars connected to the steering axis, and associated suspensions to a front wheel of a motorcycle, **characterized in that** wedge formed means are provided capable to cooperate with at least one end part (3A) of said sleeve (3) and a related end part (17) of said bearing holder part, these means cooperating with at least one portion of the surfaces of said end parts (3A, 17) and being attachable to at least one of said end parts, said wedge means comprising conically shaped locking means (21) forming said attachment by locking said bearing holder part (13) on said sleeve (3).

2. Steering unit according to claim 1, **characterized in that** locking means (21) are at least one lockring.

3. Steering unit according to claim 2, **characterized in that** lockring (21) is coupled to a first end portion (17) of bearing holder (13), said lockring including an outside conical shaped surface (21A) capable to cooperate with a conical shaped end part (3A) of sleeve (3).

4. Steering unit according to claim 2, **characterized in that** lockring (21) is coupled to an end portion (3A) of sleeve, said lockring showing inside a conical shaped surface capable to cooperate with a related conical shaped surface of a first portion of an end part (17) of bearing holder part.

5. Steering unit according to claims 3 and 4, **characterized in that** first portion of end part (17) of bearing holder part (13) is located in the neighborhood of a steering head (5) of steering assembly unit.

6. Steering unit according to claim 5, **characterized in that** first portion of end part (17) of bearing holder part includes a first cylindrical part (17A)for centering and a second (17B) threaded part capable to cooperate with a related threaded part of lockring for a detachable coupling with this last one.

7. Steering unit according to claim 3 or 4, **characterized in that** bearing holder part (13) includes a second portion of an end part (18) having an outside conical shaped surface (18)A capable to cooperate with a related end part (3B) of sleeve (3).

8. Steering unit according to claim 5, **characterized in that** second portion of end part (18) of bearing holder part (13) is located in the neighborhood of a steering base (6) of steering assembly unit.

9. Steering unit according to claim 2, **characterized in that** lockring (21) is coupled to second portion of end part (18) of bearing holder part (13), said lockring including an outside conical shaped surface (21A) capable to cooperate with conical shaped end part (3B) of sleeve (3).

10. Steering unit according to claim 2, **characterized in that** lockring (21) includes a free surface (22A) provided with means of attachment (22) for its displacement with reference to sleeve (3) and to bearing holder part (13).

11. Steering unit according to claim 10, **characterized in that** means of attachment are blind holes capable to accept a tool for lockring handling (21).

12. Steering unit according to claim 1, **characterized in that** wedge shaped means include a plurality of components capable to cooperate with discrete surface portions of bearing holder part (13) and of sleeve (3).

13. Steering unit according to claim 1, **characterized in that** wedge shaped detachable means are included associated at both end parts (17,18;3A,38) of bearing holder part (13) and of sleeve (3).

14. Steering unit according to claim 1, **characterized in that** steering axis (4) includes a first end part (10) associated with a lockring (11) showing a flange (12) that cooperates with a bearing (14) inserted in a housing (30) of bearing holder part (13), said lockring (11) cooperates with steering head (5),said steering axis includes a second end part (9) inserted into a housing (8) of steering unit base (6) and attached to this last one, in proximity of this second end part (9) a second bearing being placed (14), inserted in its relevant housing (30) of bearing holder part (13), said steering axis (4) having an axis (W) coincident with that of bearing holder (13), an upper part (17) of this last one showing blind holes (28) for adjustment of spatial location of this axis (W) with reference to that (R) of sleeve (3).

15. Steering unit according to claim 1, **characterized in that** bearing holder part includes two flanged parts located in connection with opposite end parts of steering axis (4).

## Patentansprüche

1. Lenkeinheit mit einer Verriegelungseinrichtung für ein Lagerhalterungsteil (13) der Lenkeinheit eines Motorrads oder dergleichen, von dem Art, der eine Lenkachse (4) umfaßt, die in dem Lagerhalterungsteil plaziert ist, das wenigstens teilweise in eine Buchse (3) des Fahrgestells (1) des Fahrzeugs eingesetzt ist, wobei die Lenkachse (4) Teil einer Aufbaueinheit der Lenkung ist, die eine mit der Lenkachse verbundene Lenkstange und eine zugehörige Aufhängung für ein Vorderrad eines Motorrads hat, **dadurch gekennzeichnet, daß** keilförmige Mittel vorgesehen sind, die mit wenigstens einem Endteil (3A) der Buchse (3) und einem zugeordneten Endteil (17) des Lagerhalterungsteils zusammenwirken können, wobei diese Mittel wenigstens mit einem Bereich der Oberflächen dieser Endteile (3A, 17) zusammenwirken und mit wenigstens einem der Endteile verbindbar ist, wobei die Keilmittel kegelförmige Verriegelungsmittel (21) aufweisen, die die Verbindung durch Verriegeln der Lagerhalterung (13) an der Buchse (3) bilden.

2. Steuereinheit nach Anspruch 1, **dadurch gekennzeichnet, daß** die Verriegelungsmittel wenigstens ein Verschlußring sind.

3. Lenkeinheit nach Anspruch 2, **dadurch gekennzeichnet, daß** der Verschlußring (21) mit einem ersten Endbereich (17) des Lagerhalterungsteils (13) verbunden ist, wobei der Verschlußring eine kegelförmige äußere Oberfläche (21A) aufweist, die in der Lage ist, mit einem kegelförmigen Endteil (3A) der Buchse (3) zusammenzuwirken.

4. Lenkeinheit nach Anspruch 2, **dadurch gekennzeichnet, daß** der Verschlußring (21) mit einem Endbereich (3A) der Buchse verbunden ist, wobei der Verschlußring innen eine kegelförmige Oberfläche hat, die dazu in der Lage ist, mit einer entsprechenden kegelförmigen Oberfläche eines ersten Bereichs eines Endteils (17) des Lagerungshalterungsteils zu kooperieren.

5. Lenkeinheit nach Ansprüchen 3 und 4, **dadurch gekennzeichnet, daß** ein erster Bereich des Endteils (17) des Lagerungshalterungsteils (13) in der Nachbarschaft des Lenkungslagers (5) der Lenkaufbaueinheit angeordnet ist.

6. Lenkeinheit nach Anspruch 5, **dadurch gekennzeichnet, daß** der erste Bereich des Endteils (17) des Lagerhalterungsteils einen ersten zylindrischen Teil (17A) zum Zentrieren und einen zweiten (17B) mit Gewinde versehenen Teil aufweist, der dazu in der Lage ist, mit einem entsprechenden mit Gewinde versehenen Teil des Verschlußrings zur lösbaren Verbindung mit dem letzteren zusammenzuwirken.

7. Lenkeinheit nach Anspruch 3 oder 4, **dadurch gekennzeichnet, daß** das Lagerhalterungsteil (13) einen zweiten Bereich eines Endteils (18) aufweist, das eine kegelförmige Oberfläche (18A) hat, die dazu in der Lage ist, mit einem entsprechenden Endteil (3B) der Buchse (3) zusammenzuwirken.

8. Lenkeinheit nach Anspruch 5, **dadurch gekennzeichnet, daß** ein zweiter Endbereich des Endteils (18) des Lagerhalterungsteils (13) in der Nachbarschaft des Lenkungslagers (6) der Lenkeinheit angeordnet ist.

9. Lenkeinheit nach Anspruch 2, **dadurch gekennzeichnet, daß** der Verschlußring (21) mit einem zweiten Bereich eines Endteils (18) des Lagerhalterungsteils (13) verbunden ist, wobei der Verschlußring eine äußere kegelförmige Oberfläche (21A) aufweist, die dazu in der Lage ist, mit einem kegelförmigen Endteil (3B) der Buchse (3) zusammenzuwirken.

10. Lenkeinheit nach Anspruch 2, **dadurch gekennzeichnet, daß** der Verschlußring (21) eine freie Oberfläche (22A) aufweist, die mit Aufnahmemitteln (22) versehen ist, um ihn in bezug auf die Buchse (3) und das Lagerhalterungsteil (13) zu verschieben.

11. Lenkeinheit nach Anspruch 10, **dadurch gekennzeichnet, daß** die Aufnahmemittel Sacklöcher sind, die dazu in der Lage sind, ein Werkzeug zur Handhabung des Verschlußrings (21) aufzunehmen.

12. Lenkeinheit nach Anspruch 1, **dadurch gekennzeichnet, daß** die keilförmige Mittel eine Mehrzahl von Komponenten umfassen, die dazu in der Lage sind, mit diskreten Oberflächenbereichen des Lagerhalterungsteils (13) und der Buchse (3) zusammenzuwirken.

13. Lenkeinheit nach Anspruch 1, **dadurch gekennzeichnet, daß** kegelförmige, lösbare Mittel, die den beiden Endteilen (17, 18; 3A, 3B) des Lagerhalterungsteils (13) und der Buchse (3) zugeordnet sind, vorhanden sind.

14. Lenkeinheit nach Anspruch 1, **dadurch gekennzeichnet, daß** die Lenkachse (4) ein erstes Endteil (10) aufweist, das einem Verschlußring (11) zugeordnet ist, der einen Flansch (12) hat, welcher mit einem in ein Gehäuse (30) des Lagerhalterungsteils (13) eingesetztem Lager (14) zusammenwirkt, wobei der Verschlußring (11) mit einem Lenkungslager (5) zusammenwirkt, wobei die Lenkachse ein zweites Endteil (9) aufweist, das in ein Gehäuse (8) einer Lenkeinheitsbasis (6) eingesetzt ist und mit der letzteren verbunden ist, wobei in der Nähe dieses zweiten Endteils (9) ein zweites Lager (14) plaziert ist, das in ein betreffendes Gehäuse (30) des Lagerhalterungsteils (13) eingesetzt ist, wobei die Lenkachse (4) eine mit dem Lagerhalterungsteil (13) zusammenfallende Achse (W) hat, wobei ein oberer Teil (17) des letzteren Sacklöcher (28) zur Einstellung der räumlichen Positionierung dieser Achse (W) in bezug auf diejenige (R) der Buchse (3) hat.

15. Lenkeinheit nach Anspruch 1, **dadurch gekennzeichnet, daß** das Lagerhalterungsteil zwei Flanschbereiche aufweist, die im Zusammenhang mit gegenüberliegenden Endteilen der Lenkachse (4) angeordnet sind.

## Revendications

1. Unité de direction comprenant un dispositif de verrouillage pour une partie de support de roulements (13) de l'unité de direction d'une moto ou similaire du type comprenant un axe de direction (4) placé dans la partie de support de roulements, qui est inséré au moins partiellement dans un manchon (3) d'un châssis (1) d'un véhicule, l'axe de direction (4) faisant partie d'une unité d'ensemble de direction, des guidons étant reliés à l'axe de direction et des suspensions étant associées à une roue avant d'une moto, **caractérisée en ce que** des moyens en forme de coin capables de coopérer avec au moins une partie d'extrémité (3A) dudit manchon (3) et une partie d'extrémité associée (17) de ladite partie de support de roulements sont prévus, ces moyens coopérant avec au moins une partie des surfaces desdites parties d'extrémité (3A, 17) et pouvant être fixés à au moins l'une desdites parties d'extrémité, lesdits moyens formant coin comprenant des moyens de verrouillage de forme conique (21) formant ladite fixation en verrouillant ladite partie de support de roulements (13) sur ledit manchon (3).

2. Unité de direction selon la revendication 1, **caractérisée en ce que** des moyens de verrouillage (21) sont au moins une bague de maintien.

3. Unité de direction selon la revendication 2, **caractérisée en ce qu'**une bague de maintien (21) est couplée à une première partie d'extrémité (17) d'un support de roulements (13), ladite bague de maintien comprenant une surface extérieure de forme conique (21A) capable de coopérer avec une partie d'extrémité de forme conique (3A) d'un manchon (3).

4. Unité de direction selon la revendication 2, **caractérisée en ce qu'**une bague de maintien (21) est couplée à une partie d'extrémité (3A) d'un manchon, ladite bague de maintien présentant à l'intérieur une surface de forme conique capable de coopérer avec une surface de forme conique associée d'une première partie d'une partie d'extrémité (17) d'une partie de support de roulements.

5. Unité de direction selon les revendications 3 et 4, **caractérisée en ce qu'**une première portion d'une partie d'extrémité (17) d'une partie de support de roulements (13) est située au voisinage d'un tube de direction (5) d'une unité d'ensemble de direction.

6. Unité de direction selon la revendication 5, **caractérisée en ce qu'**une première portion d'une partie d'extrémité (17) d'une partie de support de roulements comprend une première partie cylindrique (17A) de centrage et une deuxième (17B) partie filetée capable de coopérer avec une partie filetée associée d'une bague de maintien pour un accouplement détachable avec cette dernière.

7. Unité de direction selon la revendication 3 ou 4, **caractérisée en ce qu'**une partie de support de roulements (13) comprend une deuxième portion d'une partie d'extrémité (18) comportant une surface extérieure de forme conique (18A) capable de coopérer avec une partie d'extrémité associée (3B) d'un manchon (3).

8. Unité de direction selon la revendication 5, **caractérisée en ce qu'**une deuxième portion d'une partie d'extrémité (18) d'une partie de support de roulements (13) est située au voisinage d'une base de direction (6) d'une unité d'ensemble de direction.

9. Unité de direction selon la revendication 2, **caractérisée en ce qu'**une bague de maintien (21) est couplée à une deuxième portion d'une partie d'extrémité (18) d'une partie de support de roulements (13), ladite bague de maintien comprenant une surface extérieure de forme conique (21A) capable de coopérer avec une partie d'extrémité de forme conique (3B) d'un manchon (3).

10. Unité de direction selon la revendication 2, **caractérisée en ce qu'**une bague de maintien (21) comprend une surface libre (22A) pourvue de moyens de fixation (22) pour son déplacement par rapport à un manchon (3) et à une partie de support de roulements (13).

11. Unité de direction selon la revendication 10, **caractérisée en ce que** des moyens de fixation consistent en des trous borgnes capables de recevoir un outil pour la manipulation d'une bague de maintien (21).

12. Unité de direction selon la revendication 1, **caractérisée en ce que** des moyens en forme de coin comprennent une pluralité de composants capables de coopérer avec des parties de surface discrètes d'une partie de support de roulements (13) et d'un manchon (3).

13. Unité de direction selon la revendication 1, **caractérisée en ce que** des moyens détachables en forme de coin sont inclus associés à la fois aux parties d'extrémité (17, 18 ; 3A, 3B) d'une partie de support de roulements (13) et d'un manchon (3).

14. Unité de direction selon la revendication 1, **caractérisée en ce qu'**un axe de direction (4) comprend une première partie d'extrémité (10) associée à une bague de maintien (11) présentant un rebord (12) qui coopère avec un roulement (14) inséré dans un logement (30) d'une partie de support de roulements (13), ladite bague de maintien (11) coopère avec un tube de direction (5), ledit axe de direction comprend une deuxième partie d'extrémité (9) insérée dans un logement (8) d'une base d'unité de direction (6) et fixée à cette dernière, à proximité de cette deuxième partie d'extrémité (9), un deuxième roulement étant placé (14), inséré dans son logement associé (30) d'une partie de support de roulements (13), ledit axe de direction (4) comportant un axe (W) coïncidant avec celui d'un support de roulements (13), une partie supérieure (17) de ce dernier comportant des trous borgnes (28) pour l'ajustement de l'emplacement spatial de cet axe (W) par rapport à celui (R) d'un manchon (3).

15. Unité de direction selon la revendication 1, **caractérisée en ce qu'**une partie de support de roulements comprend deux parties à rebord situées en relation avec des parties d'extrémité opposées d'un axe de direction (4).
